**Europäisches Patentamt**

**European Patent Office**

**Office européen des brevets**

(11) Numéro de publication: **0 068 927**
**B1**

## (12) FASCICULE DE BREVET EUROPEEN

(45) Date de publication du fascicule du brevet:
**13.11.85**

(21) Numéro de dépôt: **82400983.1**

(22) Date de dépôt: **27.05.82**

(51) Int. Cl.⁴: **H 01 G 4/38,** H 01 G 4/40

(54) **Bloc de condensateurs pour la constitution d'un multiplicateur de tension intégré.**

(30) Priorité: **05.06.81 FR 8111218**

(43) Date de publication de la demande:
**05.01.83 Bulletin 83/1**

(45) Mention de la délivrance du brevet:
**13.11.85 Bulletin 85/46**

(84) Etats contractants désignés:
**DE GB**

(56) Documents cités:
**DE - A - 2 533 368**
**FR - A - 2 437 688**
**GB - A - 1 405 081**

(73) Titulaire: **L.C.C.-C.I.C.E. - COMPAGNIE EUROPEENNE
DE COMPOSANTS ELECTRONIQUES, 50, rue
Jean-Pierre Timbaud B.P. 301, F-92402 Courbevoie (FR)**

(72) Inventeur: **Saint Marcoux, Roland, THOMSON-CSF
SCPI 173, bld Haussmann, F-75379 Paris Cedex 08 (FR)**

(74) Mandataire: **Ruellan-Lemonnier, Brigitte et al,
THOMSON-CSF SCPI 173, boulevard Haussmann,
F-75379 Paris Cedex 08 (FR)**

## Description

La présente invention concerne un bloc de condensateurs pour la constitution d'un multiplicateur de tension comprenant des groupes de condensateurs montés en série, lesdits groupes de condensateurs étant réalisés sous forme d'un bloc monolithique comprenant un empilement d'armatures métalliques séparées par des couches diélectriques, ledit empilement comprenant plusieurs groupes d'armatures métalliques superposés, chaque groupe d'armatures étant relié à une connexion externe du bloc, lesdites connexions étant disposées successivement sur l'une des faces dudit bloc, les armatures d'un groupe étant disposées partiellement en regard des armatures correspondantes d'au moins un autre groupe.

Un multiplicateur de tension permet d'obtenir une tension continue supérieure à la tension alternative établie à l'entrée. Il est utilisé, par exemple, dans les générateurs hautes tensions pour tubes cathodiques.

De tels multiplicateurs de tension sont constitués de 2 rangées de capacités en série et d'une pluralité de diodes interconnectant les capacités d'une rangée suivant, par exemple, le montage classique de l'échelle de Greinacher. Les diodes sont connectées en série pour que le courant alternatif soit unidirectionnel et charge chacune des capacités. Pour réaliser un multiplicateur de tension, des composants actifs et passifs sont donc assemblés suivant le schéma du montage du multiplicateur puis surmoulés, le multiplicateur se présentant sous la forme d'un bloc dans lequel voisinent différents matériaux.

Néanmoins, ces matériaux ont des comportements différents au cours du fonctionnement du multiplicateur de tension vis-à-vis des conditions climatiques, thermiques, électriques et vis-à-vis du vieillissement, ce qui apporte des contraintes entre les composants dudit bloc et provoque une modification des caractéristiques entrainant une dégradation des performances. Aussi, pour la fabrication d'un multiplicateur de tension, on réalise un bloc homogène de condensateurs répartis en deux groupes de condensateurs indépendants; puis, on façonne un creux dans la partie du bloc située entre les deux groupes de condensateurs qui devient un logement destiné aux diodes interconnectant les condensateurs des deux groupes.

On connaît du brevet allemand DE-2 533 368 un multiplicateur de tension en cascade ayant une pluralité de blocs formant deux par deux les condensateurs d'un côté d'une échelle de Greinacher. La valeur des condensateurs est adaptée en faisant varier la surface superposée des plaques métalliques lors de l'assemblage. Cette structure prévoit des électrodes à proximité les unes des autres, dans un même plan.

Une réalisation desdits blocs de condensateurs a été proposée dans le brevet européén 34 102. Ce brevet appartient à l'état de la technique visé à l'article 54 — par. 3 — CBE. Suivant ce brevet, un bloc homogène de condensateurs montés en série, utilisable dans un multiplicateur de tension à structure céramique multicouche, est réalisé en effectuant successivement une opération de métallisation de feuilles minces de diélectrique céramique, cette métallisation étant faite suivant un schéma tel que chaque face d'une feuille porte un certain nombre de zones métalliques constituant des armatures ou électrodes de condensateurs, ces zones étant disposées de façon telle qu'une zone sur deux constitue une armature commune à deux condensateurs montés en série, une opération d'empilage des feuilles minces métallisées disposées de façon que les armatures se trouvent placées en regard les unes des autres, une opération d'établissement des connexions entre les différentes armatures, en parallèle suivant la disposition desdites armatures suite à l'empilage des feuilles métallisées, l'établissement desdites connexions étant réalisé par métallisation partielle extérieure au bloc constitué à la suite des opérations précédentes, une opération de frittage de la céramique, ledit bloc constituant un groupe de condensateurs intégrés montés en série, avec chaque condensateur constitué par un certain nombre de condensateurs élémentaires montés en parallèle. On remarque que les couches diélectriques sont, dans ce cas, des feuilles minces de diélectrique céramique et que les plaques métalliques sont des métallisations desdites feuilles. Toutefois, une telle disposition des plaques de condensateurs présente l'inconvénient de laisser à proximité deux plaques métalliques pouvant avoir une différence de potentiel élevée. En effet, deux condensateurs en série se trouvent être constitués par trois plaques métalliques: une plaque commune et deux plaques extrêmes dont une zone au moins se trouve en regard d'une zone de ladite plaque commune. Lesdites plaques extrêmes entre deux mêmes couches diélectriques, sont sensiblement proches l'une de l'autre du fait de la structure en regard et ont une différence de potentiel pouvant être importante. Aussi, ledit bloc de condensateur possède l'inconvénient de permettre un claquage entre lesdites plaques extrêmes au cas où la différence de potentiel entre lesdites plaques extrêmes est conséquente. Un multiplicateur de tension comportant un bloc de condensateur de ce type est également décrit dans le brevet français 2 437 688.

La présente invention permet d'éviter ces inconvénients. Dans ce but, elle est caractérisée en ce que l'ensemble des groupes d'armatures constitue une pluralité de cellules de base, chaque cellule de base comportant n armatures métalliques, avec n = 3 ou 4 et comprenant, pour n = 3, deux condensateurs en série constitués par une armature commune et par deux armatures extrêmes dont une zone se trouve en regard de ladite armature commune ou comprenant, pour n = 4, trois condensateurs en série constitués par deux armatures extrêmes dont chacune a une zone se trouvant en regard d'une des deux autres armatures, celles-ci étant aussi décalées l'une par rapport à l'autre, la $n^{\text{ième}}$ armature étant disposée du côté opposé à la $(n-1)^{\text{ième}}$ armature par rapport à la première pour $n=3$, ou par rapport à la première et à la deuxième pour $n=4$, et ladite $n^{\text{ième}}$ armature étant séparée de la $(n-1)^{\text{ème}}$ armature par $(n-1)$ couches diélectriques dont $(n-2)$ couches sont les couches placées entre la $(n-1)^{\text{ème}}$ armature et la $(n-2)^{\text{ème}}$ armature, de telle sorte que deux armatures appartenant à deux groupes d'armatures différents mais situées dans un même plan soient reliées à des connexions externes séparées par $(n-1)$ autres connexions externes.

On appelle dans toute la suite de la présente description, cellule de base dudit bloc, l'arrangement de plaques métalliques et de couches diélectriques qui par reproductions successives formera ledit bloc dans son ensemble. De plus, on appelle reproduction verticale respectivement horizontale de la cellule de base, toute reproduction de ladite cellule perpendiculaire respectivement parallèle aux couches diélectriques.

On considère pour les réalisations habituelles de l'homme de l'art que les seuls risques sensibles de claquage perturbant la mise en œuvre dudit bloc de condensateurs en série sont ceux existants entre deux plaques métalliques en regard d'une même plaque. Cette affirmation se justifie car deux plaques métalliques n'étant pas en regard d'une même plaque métallique sont, alors, suffisamment éloignées l'une de l'autre pour que tout claquage soit improbable dans les conditions normales d'utilisation.

La cellule de base dudit bloc, est constituée, pour $n=3$, de trois plaques métalliques décalées les unes par rapport aux autres et successivement en regard, la deuxième plaque étant séparée de la première par une couche diélectrique, la troisième plaque étant séparée de la deuxième plaque par deux couches diélectriques dont une est la couche diélectrique précédente, c'est-à-dire que l'on a une partie de la deuxième plaque qui est en regard d'une partie de la première plaque à travers une couche diélectrique et qu'une partie de la troisième plaque est en regard d'une partie de la première plaque à travers deux couches diélectriques dont une est la couche diélectrique précédente. On améliore donc la tenue en tension dudit bloc de condensateurs en série sans nuire notablement aux autres avantages du condensateur utilisé dans le multiplicateur de tension intégré selon l'art antérieur. En effet, le supplément du nombre de couches diélectriques n'accroît pratiquement pas les dimensions dudit multiplicateur de tension. De plus, on remarque que la variation de la surface desdites plaques permet d'ajuster les capacités aux valeurs que l'on désire obtenir et en particulier de régler toutes les capacités à la même valeur alors que le nombre de couches diélectriques intercalées varie.

La cellule de base dudit bloc est constituée, pour $n=4$, de quatre plaques métalliques décalées les unes par rapport aux autres et successivement en regard, la première plaque étant séparée de la deuxième plaque par une couche diélectrique, la troisième plaque étant séparée de la deuxième plaque par deux couches diélectriques dont une est la couche diélectrique précédente, la quatrième plaque étant séparée de la troisième par trois couches diélectriques dont deux couches diélectriques sont les deux couches diélectriques précédentes. On améliore, ainsi, la tenue en tension dudit bloc de condensateurs.

L'invention est plus particulièrement utilisée pour des condensateurs céramiques du type I ou du type II. Le diélectrique peut également être un film plastique comme le polystyrène, le polycarbonate, le polytéréphtalate d'éthylène ou le polypropylène.

La présente invention sera mieux comprise à l'aide de la description suivante donnée à titre non limitatif conjointement aux figures qui représentent:
— la figure 1, un bloc homogène de condensateurs en série selon l'art antérieur,
— la figure 2, le schéma électrique équivalent du bloc de la figure 1,
— la figure 3, la cellule de base du bloc homogène de condensateurs selon l'art antérieur,
—la figure 4, un bloc homogène de condensateurs en série selon l'invention,
— la figure 5, la cellule de base du bloc homogène de condensateurs de la figure 4,
— la figure 6, une cellule de base du bloc homogène de condensateurs selon l'invention.

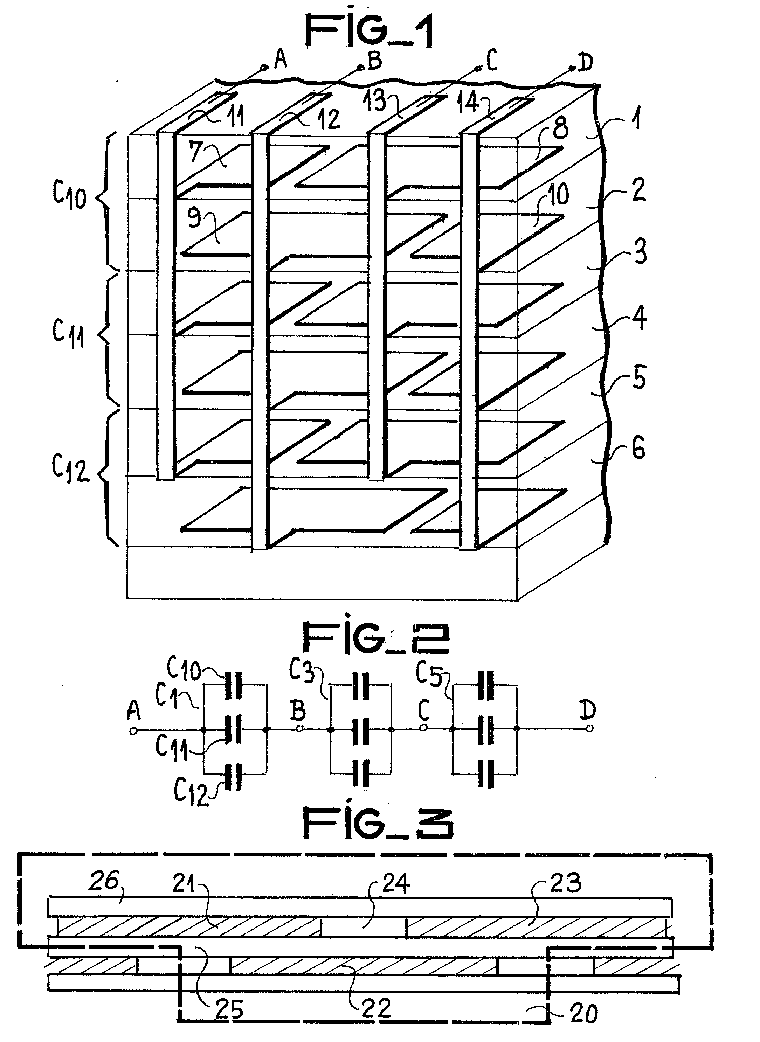

La figure 1 représente sous la forme d'un bloc céramique, ledit bloc de condensateurs montés en série, selon l'art antérieur, et réalisé suivant la technologie multicouche. On utilise pour fabriquer un groupe de tels condensateurs des feuilles minces de diélectrique, de l'ordre par exemple de 10 à 150 µm présentant une tenue en tension par millimètre suffisante pouvant être de l'ordre de 5 à 10 fois supérieure à celle des diélectriques massifs de forte épaisseur supérieure au millimètre utilisés souvent pour fabriquer des condensateurs. Ces feuilles minces de diélectrique céramique sont métallisées, à l'aide de palladium, d'argent-palladium, d'or-palladium, de nickel, ou autres métaux, sur une épaisseur de 1 µm à 2 µm, suivant une disposition propre à créer plusieurs condensateurs, puis empilées, et pressées de façon à donner un bloc homogène comportant en son intérieur un groupe de condensateurs montés en série. Le schéma électrique équivalent est montré figure 2. On remarque sur ce schéma que chaque condensateur, soit C1, C3 et C5 est constitué par plusieurs condensateurs élémentaires, trois dans l'exemple décrit, montés en parallèle, ceci pour la raison qu'un seul condensateur ne pourrait avoir la valeur de capacité nécessaire. La métallisation de chaque feuille de diélectrique céramique telle que 1, 2, ..., 5, 6 consiste à créer au moins dans l'exemple décrit, deux zones métalliques 7 et 8 de surface différente sur la feuille 1 et 9—10 sur la feuille 2. La zone 7 apparaît comme un carré et la zone 8 comme rectangle de surface double. La zone 7 constitue une armature d'un condensateur élémentaire constituant elle-même l'armature extérieure du condensateur C1, repérée par le chiffre 7, tandis que la zone 8, de surface double, représente l'ensemble des armatures en série du condensateur C3 et du condensateur C5. De façon semblable, la zone 9 rectangulaire de surface double de la zone représente l'ensemble des armatures en série des condensateurs C1 et C3, tandis que la zone 10 représente l'armature de droite du condensateur C5. Ces schémas sont reproduits alternativement sur chacune des feuilles 3, 4, 5 et 6 par exemple. Au moment de l'empilage des feuilles ainsi métallisées des deux types, on met en place, de façon correcte les armatures des condensateurs élémentaires qui constitueront les condensateurs C1, C3 et C5. Après l'empilage, c'est-à-dire après que les feuilles de diélectrique céramique aient été mises en place et les condensateurs formés, on établit les connexions entre les différentes armatures des condensateurs élémentaires et on les ramène sur les faces du bloc par une métallisation extérieure ainsi que cela est parfaitement visible sur la figure 1. La métallisation 11 représente la connexion entre la borne d'entrée A et la première armature, de gauche sur la figure 2 du condensateur C1, la métallisation 12 représente la connexion entre l'armature de droite du condensateur C1 et l'armature de gauche du condensateur C3 aboutissant au point B, la métallisation 13 représente la connexion entre l'armature de droite du condensateur C3 et l'armature de gauche du condensateur C5, aboutissant au point C et la métallisation 14 représente la connexion entre l'armature de droite du condensateur C5 et la borne de sortie du groupe de condensateurs imagé sur la figure 1.

La figure 2 représente le schéma électrique équivalent du bloc de la figure 1.

La figure 3 représente la cellule de base (20) dudit bloc homogène de condensateurs en série, c'est-à-dire l'ensemble formé par les métallisations 7, 8 et 9. Sur cette figure, la plaque métallique équivalente de la métallisation (7) est référencée en (21), la plaque équivalente de la métallisation (8) est référencée en (23), la plaque équivalente de la métallisation (9) est référencée en (22). On voit aisément que la cellule de base (20) est reproductible horizontalement et verticalement. Les plaques 21, 22 et 23 ont les mêmes dimensions afin de permettre la reproductibilité horizontale. En bout de chaîne, lesdites plaques seront moitié plus petites.

L'espace 24 compris entre les plaques 21 et 23 est en fait une couche d'air très fine. En effet, les couches diélectriques 25 et 26 de part et d'autre des plaques 21 et 23 subissent une pression telle qu'elles s'incrustent dans l'espace 24. Cette juxtaposition des couches 25 et 26 à l'intérieur de l'espace 24 crée un affaiblissement de la tenue en tension entre les deux plaques 21 et 23.

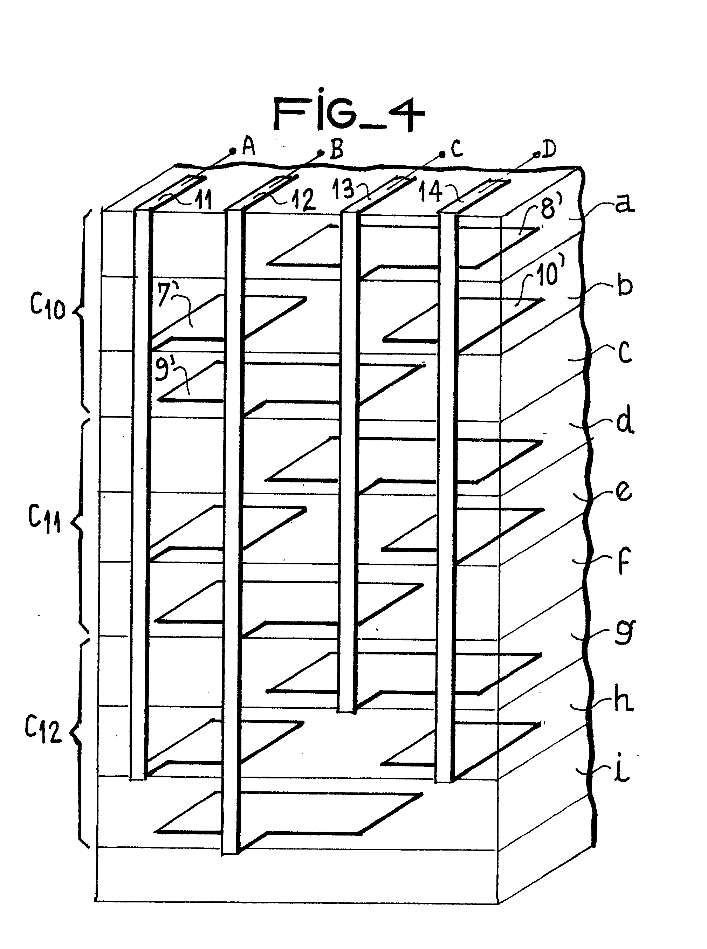

La figure 4 représente, sous la forme d'un bloc céramique, ledit bloc de condensateurs montés en série selon l'invention et réalisés suivant la technologie multicouche. Les mêmes éléments que ceux de la figure 1 portent les mêmes références. Le schéma électrique équivalent de la figure 4 est également représenté par la figure 2. Les feuilles de diélectrique (a, b, . . . , h, i) sont métallisées avec la même technique que les feuilles diélectriques (1, 2, . . . , 5, 6). Les métallisations (7', 8', 9', 10') ont la même géométrie que les métallisations (7, 8, 9, 10) et le même rôle électrique. Cependant, l'organisation structurelle desdites métallisations (7', 8', 9', 10') n'est pas la même que pour lesdits métallisations (7, 8, 9, 10). Ladite organisation structurelle est la suivante: les métallisations (7') et (9') sont en regard, réalisées sur deux feuilles de diélectrique (c, d) voisines, comme sur la figure 1. Par conséquent, la métallisation (8') en regard des métallisations (9') et (10') est située sur une feuille diélectrique (b) rajoutée sur la feuille diélectrique (c) de la métallisation (7') et donc, la métallisation (8') est séparée de la métallisation (9') par deux feuilles de diélectrique (b, c), au lieu d'une dans le cas de la figure 1. La métallisation (10'), en regard de la métallisation (8') est alors réalisée sur la même feuille de diélectrique (c) que la métallisation (7'). Par conséquent, on observe successivement, de bas en haut par exemple, la feuille de diélectrique (d) avec la métallisation (9'), la feuille de diélectrique (c) avec la métallisation (7') et (10'), la feuille de diélectrique (b) avec la métallisation (8'). Il reste, donc, qu'une feuille de diélectrique (c) peut supporter plusieurs métallisations: les métallisations (7') et (10') dans ce cas. Cependant, lesdites deux métallisations (7') et (10') n'ont en regard aucune métallisation en commun. On constate, d'ailleurs, que lesdites deux métallisations (7') et (10') sont séparées par une demilargeur de métallisation (9') et (8') ce qui est suffisant pour que tout risque de claquage soit improbable. Aussi, la distance qui les sépare est suffisante pour permettre une bonne tenue en tension dudit bloc de condensateurs et certainement supérieure à la tenue en tension du bloc représenté sur la figure 1. Il est possible de reproduire verticalement l'ensemble constitué par lesdites trois feuilles de diélectrique, surmontées des métallisations (7'), (8'), (9') et (10') et d'ailleurs, la figure 4 représente cette reproduction. Mais il est également possible de reproduire horizontalement l'ensemble constitué par les trois feuilles de diélectrique (b, c, d) surmontées des métallisations (7'), (8') et (9'). La métallisation (10') joue alors le même rôle que la métallisation (7'). La cellule de base du bloc de condensateurs selon la figure 4 est donc constitué des couches diélectriques (b, c, d) supportant les métallisations (7'), (8') et (9'). Un tel dispositif permet d'augmenter d'un facteur 1,2 à 2 la tenue en tension dudit bloc.

La figure 5 représente la cellule de base du bloc de condensateurs de la figure 4. Les mêmes éléments que ceux de la figure précédente portent les mêmes références. Les métallisations (7') et (10') sont représentées avec la même dimension que les plaques (8') et (9') car la reproduction horizontale n'est pas arrêtée comme c'est le cas sur le bloc de la figure 4. On voit que la cellule de base de cette figure correspond à la cellule de base comportant n plaques avec n = 3, décrite précédemment.

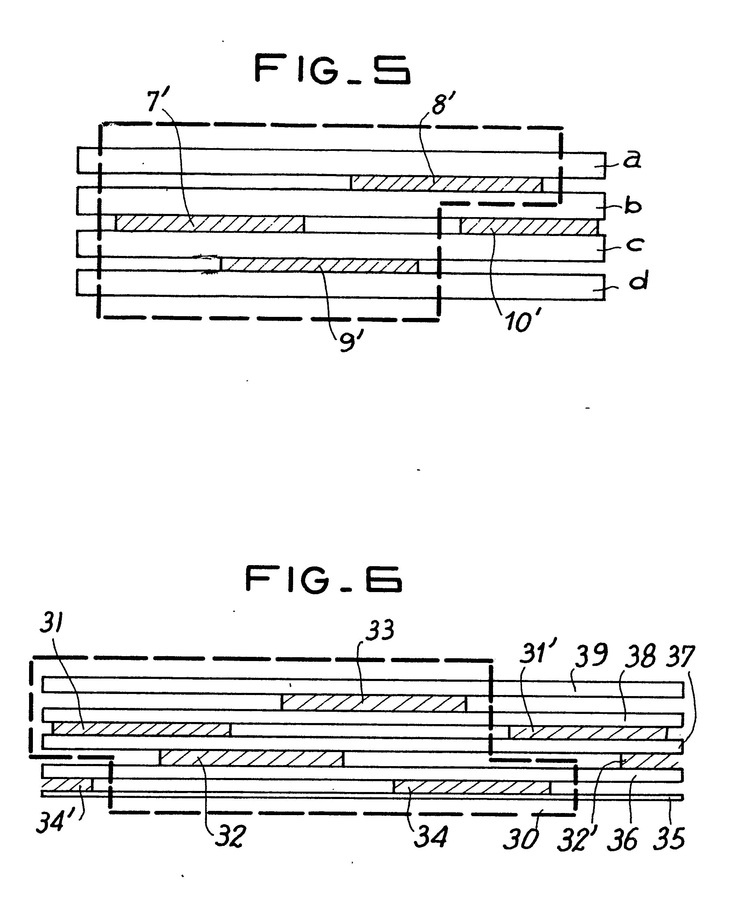

La figure 6 représente une organisation possible de la cellule de base (30) dudit bloc selon l'invention reproductible horizontalement et verticalement. Ladite cellule (30) est constituée de quatre plaques métalliques (31), (32), (33), (34) et par cinq couches diélectriques. Les plaques en regard sont décalées parallèlement aux couches diélectriques, l'une par rapport à sa suivante. Elles sont successivement les plaques (31) et (32) séparées par la couche diélectrique (37); les plaques (32) et (33) séparées par les couches diélectriques (37) et (38); les plaques (33) et (34) séparées par les couches diélectriques (38), (37) et (36). On place, enfin, une couche diélectrique au-dessous (35) de cet arrangement. La cellule de base de la figure 6 correspond à la cellule de base comportant n plaques avec n = 4 décrite précédemment. Il est alors possible de placer en regard de la plaque (34) une plaque diélectrique (31') entre les deux mêmes couches diélectriques que la plaque (31) et de rebâtir l'arrangement précédemment décrit. De même, la reproduction verticale est réalisable. De plus, on remarque que la variation de la surface desdites plaques permet d'ajuster les capacités aux valeurs que l'on désire obtenir et en particulier de régler toutes les capacités à la même valeur alors que le nombre de couches diélectriques intercalées varie.

## Revendication

Bloc de condensateurs pour la constitution d'un multiplicateur de tension comprenant des groupes de condensateurs montés en série, lesdits groupes de condensateurs étant réalisés sous forme d'un bloc monolithique comprenant un empilement d'armatures métalliques (7', 8', 9') séparées par des couches diélectriques (a, b, c), ledit empilement comprenant plusieurs groupes d'armatures (7') métalliques superposées, chaque groupe d'armatures (7') étant relié à une connexion externe (11) du bloc, lesdites connexions (11, 12, 13, 14) étant disposées successivement sur l'une des faces dudit bloc, les armatures d'un groupe (7) étant disposées partiellement en regard des armatures correspondantes d'au moins un autre groupe (9') caractérisé en ce que l'ensemble des groupes d'armatures (7', 8', 9') constitue une pluralité de cellules de base, chaque cellule de base comportant n armatures métalliques (7', 8', 9'), avec n = 3 ou 4 et comprenant, pour n = 3, deux condensateurs en série constitués par une armature commune et par deux armatures extrêmes dont une zone se trouve en regard de ladite armature commune ou comprenant, pour n = 4, trois condensateurs en série constitués par deux armatures extrêmes dont chacune a une zone se trouvant en regard d'une des deux autres armatures, celles-ci étant aussi décalées l'une par rapport à l'autre, la $n^{ième}$ armature (8') étant disposée du côté opposé à la $(n-1)^{ième}$ armature par rapport à la première pour n = 3, ou par rapport à la première et à la deuxième pour n = 4, et ladite $n^{ième}$ armature étant séparée de la $(n-1)^{ème}$ armature (9') par $(n-1)$ couches diélectriques (b, c) dont $(n-2)$ couches (c) sont les couches placées entre la $(n-1)^{ème}$ armature (9') et la $(n-2)^{ème}$ armature (7'), de telle sorte que deux armatures (7', 10') appartenant à deux groupes d'armatures différents mais situées dans un même plan soient reliées à des connexions externes (11, 14) séparées par $(n-1)$ autres connexions externes (12, 13).

## Patentanspruch

Kondensatorblock für die Ausbildung eines Spannungsvervielfachers, mit Kondensatorgruppen, die in Reihe geschaltet sind, wobei diese Kondensatorgruppen in der Form eines einzigen Blocks verwirklicht sind, der einen Stapel von Metallbelägen (7', 8', 9') aufweist, welche durch dielektrische Schichten (a, b, c) getrennt sind, wobei dieser Stapel mehrere Gruppen von übereinander angeordneten metallischen Belägen (7') aufweist und jede Gruppe (7') von Belägen mit einem äußeren Anschluß (11) des Blocks verbunden ist, wobei ferner die genannten Anschlüsse (11, 12, 13, 14) nacheinander auf einer der Flächen des Blocks angeordnet sind, die Beläge einer Gruppe (7) teilweise gegenüber den entsprechenden Belägen wenigstens einer anderen Gruppe (9') angeordnet sind, dadurch gekennzeichnet, daß die Gesamtheit der Gruppen (7', 8', 9') von Belägen eine Mehrzahl von Grundzellen bildet, wobei jede Grundzelle n metallische Beläge (7', 8', 9') aufweist, mit n = 3 oder 4, und mit, für n = 3, zwei in Reihe geschalteten Kondensatoren, die aus einem gemeinsamen Belag und zwei äußeren Belägen gebildet sind, wovon eine Zone sich gegenüber dem genannten gemeinsamen Belag befindet, oder mit, für n = 4, drei in Reihe geschalteten Kondensatoren, die aus zwei Endbelägen gebildet sind, wovon jeder eine Zone aufweist, die sich gegenüber einem der zwei anderen Beläge befindet, welche ferner gegeneinander versetzt sind, so daß der n-te Belag (8'), für n = 3 in bezug auf den ersten Belag und für n = 4 in bezug auf den ersten und zweiten Belag, auf der dem $(n-1)$ten Belag gegenüberliegenden Seite angeordnet ist, und wobei der n-te Belag von dem $(n-1)$ten Belag (9') durch $(n-1)$ dielektrische Schichten (d, c) getrennt ist, wovon $(n-2)$ Schichten (c) diejenigen Schichten sind, welche zwischen dem $(n-1)$ten Belag (9') und dem $(n-2)$ten Belag (7') liegen, so daß zwei Beläge (7', 10') die zu zwei verschiedenen Gruppen von Belägen gehören, jedoch in derselben Ebene liegen, mit äußeren Anschlüssen (11, 14) verbunden sind, die durch weitere (n−1) äußere Anschlüsse (12, 13) getrennt sind.

**Claim**

Capacitor block for forming a voltage multiplier, comprising sets of series-connected capacitors, said capacitor sets being formed as a monolithic block comprising a stack of metallic coatings (7′, 8′, 9′) separated by dielectric layers (a, b, c), said stack comprising a plurality of metallic super-imposed sets of coatings (7′) each coating set (7′) being connected to an outer terminal (11) of the block, said terminals (11, 12, 13, 14) being successively disposed on one of the faces of said block, the coatings of one set (7) being partially disposed in facing relationship to the corresponding coating of at least a further set (9′), characterized in that the entirety of the coating sets (7′, 8′, 9′) forms a plurality of base units, each base unit comprising n metallic coating (7′, 8′, 9′) with n = 3 or 4 and comprising for n = 3 two series-connected capacitors formed of a common coating and two end coatings whereof one zone is located in facing relationship to said common coating, or comprising for n = 4, three series-connected capacitors formed of two end coatings each of which having a zone in facing relationship to one of the two other coatings, the latter being further shifted with respect to each other so that the nth coating (8′) is disposed on the opposed side of the (n−1)th coating with respect to the first for n = 3 or with respect to the first and the second for n = 4 and said nth coating being separated from the (n−1)th coating (9′) by (n−1) dielectric layers (b, c) whereof (n−2) layers (c) are the layers located between the (n−1)th coating (9′) and the (n−2)th coating (7′) so that the two coatings (7′, 10′) belonging to two different sets of coatings but lying in the same plane are connected to outer terminals (11, 14) separated by (n−1) further outer terminals (12, 13).

# FIG_1

# FIG_2

# FIG_3

# FIG_4

# FIG_5

# FIG_6